# EUROPEAN PATENT SPECIFICATION

(11) **EP 2 641 922 B1**
(45) Date of publication and mention of the grant of the patent: **29.10.2014**
(21) Application number: 13158112.6
(22) Date of filing: 07.03.2013
(51) Int. Cl.: C08F 18/00

(54) **Aqueous binder systems and their use in producing coating compositions**
Wässrige Bindersysteme und ihre Verwendung bei der Herstellung von Beschichtungszusammensetzungen
Systèmes de liants aqueux et leur utilisation dans la production de compositions de revêtement

(30) Priority: 21.03.2012 US 201261613608 P
(43) Date of publication of application: 25.09.2013
(73) Proprietor: Celanese Emulsions GmbH, 65843 Sulzbach (Taunus) (DE)
(72) Inventor: Gohr, Kerstin, 65239 Hochheim (DE); Du, Jinjie, 201102 Shanghai (CN); Ren, Yuan, 201102 Shanghai (CN); Shi, Yi Fang, 200232 Shanghai (CN)
(74) Representative: Serravalle, Marco

(56) References cited:
- US-A- 4 314 067

## Description

### FIELD

The present invention relates to aqueous binder systems, their manufacture and their use in the production of coating compositions, particularly interior paints.

### BACKGROUND

In order to improve the low temperature properties of aqueous latex paints, such as their freeze-thaw stability and minimum film forming temperature (MFFT), it is known to add volatile coalescing solvents and freeze-thaw additives to latex-based paint formulations. However, these coalescing solvents, for example butyl carbitol acetate and 3-hydroxy-2,2,4-trimethylpentyl isobutyrate, and freeze-thaw additives, for example, propylene glycol and ethylene glycol, are volatile organic compounds (VOC) that are now universally recognized as being detrimental to the environment. There is therefore a need for latex-based paints that contain no volatile coalescing solvents or freeze-thaw additives, yet which provide the requisite freeze-thaw and film-forming properties.

For example, U.S. Patent No. 6,087,437 discloses aqueous coating compositions which are freeze-thaw stable in the absence of conventional volatile coalescing solvents and volatile freeze-thaw (F/T) additives. The coating compositions utilize a latex binder containing an EVA thermoplastic interpolymer which is prepared by emulsion polymerization of about 10 pphm to about 25 pphm of ethylene, about 60 pphm to about 90 pphm of vinyl acetate and 0.05 to about 1.0 pphm of a monomer represented by structure (I) 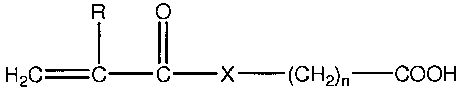 where R is hydrogen or a methyl group, X is O or NH, and n is an integer from 1 to 11.

In addition, U.S. Patent No. 5,874,498 discloses a latex composition suited for use in preparing an aqueous based paint with good low temperature properties without the addition of coalescing solvents. The latex composition comprises water, pigment, and from about 40 to 70% of film-forming polymerized resin particles containing from 80% to 95% by weight vinyl acetate, from about 5-20% by weight ethylene and 0 to 10% by weight of an alkyl acrylate comonomer, especially butyl acrylate. The polymerized resin particles in the latex have a particle size of from 0.2 to 0.35 microns average by weight as measured by capillary hydrodynamic fractionation, a glass transition temperature of from about minus 5 to about plus 8 °C, are substantially free of an insoluble fraction in toluene at 25 °C and have an intrinsic viscosity in toluene of from 1.1° to 1.6° at 25 °C.

GB 1,217,373 A discloses a mechanically and freeze-thaw stable emulsion comprising an aqueous phase having dispersed therein an iminated copolymer and containing at least 0.2 weight percent, based on the copolymer weight, of a protective colloid selected from water-soluble cellulose derivatives and water-soluble polyvinyl alcohols; the said copolymer being derived from a vinyl ester of a lower carboxylic acid, ethylene and at least one monomer containing both polymerisable olefinic unsaturation and a carboxyl group, such as acrylic, methacrylic acid, crotonic acid, itaconic acid, fumaric acid and maleic acid, and having been prepared in the presence of the protective colloid and containing, prior to imination, 0.01-1.0 milliequivalent of acid per gram of polymer.

U.S. Patent No. 3,578,618 discloses an aqueous paint composition with improved freeze-thaw stability comprising a synthetic polymer latex, a pigment, and, based on the weight of the paint, 0.1-3 percent cellulosic thickener selected from the group consisting of methyl cellulose, hydroxyethyl cellulose and carboxymethyl cellulose, said synthetic polymer latex comprising an aqueous medium having dispersed therein a vinyl acetate-ethylene copolymer containing 5 to 40% ethylene in the copolymer, said copolymer being further characterized by an intrinsic viscosity of 1 to 2.5 deciliters per gram as measured in benzene at 30° C, and said dispersed copolymer having a particle size of 0.1 to 2 , said paint having a solids content of 45 to 60 percent by weight and said pigment being present in an amount of 10 to 1000 parts by weight per 100 parts by weight of said vinyl acetate-ethylene latex solids.

According to the present invention, an aqueous binder system has now been developed which, when incorporated into a coating composition, such as an interior paint, gives not only good freeze thaw stability but also improved low temperature cracking resistance and elasticity.

### SUMMARY

In one aspect, the invention resides in an aqueous binder mixture comprising:
(A) an aqueous copolymer dispersion which has a glass transition temperature, Tg, of less than 10 °C and which is prepared by emulsion polymerization of a monomer mixture comprising:
   (i) at least 60% by weight, based on the total amount of monomers, of at least one vinyl ester, preferably vinyl acetate;
   (ii) from 15 to 30% by weight, preferably 18 to 30% by weight, more preferably 20 to 25% by weight, based on the total amount of monomers, of ethylene;
   (iii) from 0.05 to 5 % by weight, preferably 0.2 to 1.5% by weight, based on the total amount of monomers, of an ethylenically unsaturated carboxylic acid having at least 4 carbon atoms, preferably crotonic acid; and
   (iv) from 0.05 to 5 % by weight, preferably 0.2 to 1.5% by weight, based on the total amount of monomers, of an ethylenically unsaturated sulfonic acid, preferably vinyl sulfonic acid, or salt thereof.

Conveniently, the aqueous copolymer dispersion further comprises (v) up to 1 % by weight, such as from 0.1 to 0.5% by weight, based on the total amount of monomers, of an unsaturated silane comonomer.

In one embodiment, the aqueous binder mixture further comprises (B) at least 0.05 % by weight, such as from 0.2 to 3% by weight, based on the total amount of monomers, of a cellulose-based stabilizer, preferably hydroxyethyl cellulose.

In another aspect, the invention resides in a coating composition comprising: (a) the aqueous binder mixture described herein; (b) at least one solids component selected from a filler and a pigment; and (c) at least one auxiliary component selected from the group consisting of wetting agents, dispersants, emulsifiers, fillers, thickeners, defoamers, dyes and preservatives.

### DETAILED DESCRIPTION

Described herein is an aqueous binder mixture which is based on a vinyl acetate/ethylene copolymer dispersion and which is suitable for use as a solvent-free coating composition, particularly an architectural interior paint, having good freeze thaw stability, low temperature cracking resistance and elasticity.

The copolymer dispersion is produced by free radical emulsion polymerization of a monomer composition comprising (i) at least 60% by weight, based on the total amount of monomers, of at least one vinyl ester and (ii) from 15 to 30% by weight, preferably 18 to 30% by weight, more preferably 20 to 25% by weight, based on the total amount of monomers, of ethylene.

Suitable vinyl esters include vinyl esters of straight-chain and/or branched aliphatic carboxylic acids having from one to eighteen carbon atoms. In addition, it is also possible to use vinyl esters of aromatic carboxylic acids. Preferred vinyl esters include vinyl formate, vinyl acetate, vinyl propionate, vinyl butyrate, vinyl isobutyrate, vinyl pivalate, vinyl 2-ethylhexanoate, vinyl esters of saturated branched monocarboxylic acids having from 9 to 11 carbon atoms in the acid radical, such as VeoVa 9, VeoVA 10 and VeoVa 11, vinyl esters of relatively long-chain saturated or unsaturated fatty acids, for example vinyl laurate or vinyl stearate, and also vinyl esters of benzoic acid and substituted derivatives of benzoic acid such as vinyl p-tert-butylbenzoate. Vinyl acetate is particularly preferred.

In addition to the vinyl ester and ethylene, the monomer composition comprises (iii) from 0.05 to 5 % by weight, generally from 0.2 to 1.5% by weight, based on the total amount of monomers, of an ethylenically unsaturated carboxylic acid having at least 4 carbon atoms. Suitable ethylenically unsaturated carboxylic acids include crotonic acid, maleic acid, fumaric acid, and itaconic acid, with crotonic acid being preferred.

The present monomer composition further comprises (iv) from 0.05 to 5 % by weight, generally from 0.2 to 1.5% by weight, based on the total amount of monomers, of an ethylenically unsaturated sulfonic acid or salt thereof. Examples of suitable ethylenically unsaturated sulfonic acids include those having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid and vinylbenzenesulfonic acid. In addition to or instead of said acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

Optionally, the monomer composition still further comprises (v) up to 1 % by weight, generally from 0.1 to 0.5 % by weight, based on the total amount of monomers, of an ethylenically unsaturated monomer containing one or more hydrolyzable silane groups.

Suitable organosilanes include vinylmethyldimethoxysilane, vinylmethyl-diethoxysliane, vinylmethyldi-n-propoxysilane, vinylmethyldiisopropoxysilane, vinylmethyldi-n-butoxysilane, vinylmethyldi-sec-butoxysilane, vinylmethyldi-tert-butoxysilane, vinylmethyldi(2-methoxyisopropoxy)silane, vinylmethyldioctyloxysilane, γ-(meth)acryloylpropyltri(2-methoxyethoxy)silane, γ-(meth)acryloyloxypropyltri-methoxysilane, γ-(meth)acryloyloxypropyltriethoxysilane, γ-(meth)acryloyloxypropyl-tri-n-propoxy-silane, γ-(meth)acryloyloxypropyltri-isopropoxysilane, γ-(meth)acryloyl-oxypropyltributoxysilane, γ-acryloyloxypropyltri(2-methoxyethoxy)silane, γ-acryloyloxypropyltri-methoxysilane, γ-acryloyloxypropyltriethoxysilane, γ-acryloyloxypropyltri-n-propoxysilane, γ-acryloyloxypropyltriisopropoxysilane, γ-acryloyloxypropyltri-butoxysilane and vinyltri(2-methoxyethoxy)silane, vinyltrimethoxysilane, vinyltriethoxysilane, vinyltri-n-propoxysilane, vinyltriisopropoxysilane and vinyltributoxysilane. Said silane compounds can optionally also be used in the form of their (partially) hydrolysed products.

Further optional comonomers present in the monomer composition are polyethylenically unsaturated and hence crosslinking comonomers, for example diallyl phthalate, diallyl maleate, triallyl cyanurate, tetraallyloxyethane, divinylbenzene, butanediol 1,4-dimethacrylate, triethylene glycol dimethacrylate, divinyl adipate, allyl (meth)acrylate, vinyl crotonate, methylenebisacrylamide, hexanediol diacrylate, pentaerythritol diacrylate and trimethylolpropane triacrylate, or mixtures of two or more compounds from this group. These comonomers can be present in an amount up to 10% by weight, preferably up to 2% by weight, of the total monomers in the first monomer composition.

Still further optional comonomers used in the first monomer composition are hydroxy-functional esters of unsaturated carboxylic acids, such as hydroxyethyl(meth)acrylate, hydroxypropyl(meth)acrylate and adducts thereof with ethylene oxide or propylene oxide. These comonomers can be present in an amount up to 10% by weight, preferably up to 5% by weight, of the total monomers in the first monomer composition.

Yet further optional comonomers used in the first monomer composition are ethylenically unsaturated compounds containing crosslinkable groups, such as carbonyl groups or N-methylol groups. Examples thereof are diacetoneacrylamide, allyl acetoacetate, vinyl acetoacetate, acetoacetoxyethyl(meth)acrylate, N-ethanol(meth)acrylamide, N-propanol(meth)acrylamide, (meth)acrylamide, allyl carbamate, acrylonitrile, the N-methylol esters, N-methylol alkyl ethers or Mannich bases of N-methylol(meth)acrylamide or N-methylolallyl carbamate, acrylamidoglycolic acid and/or salts thereof, methyl acrylamidomethoxyacetate, N-(2,2-dimethoxy-1-hydroxyethyl)acrylamide, N-dimethylaminopropyl(meth)acrylamide, N-methyl(meth)acrylamide, N-butyl(meth)acrylamide, N-cyclohexyl(meth)acrylamide, N-dodecyl(meth)acrylamide, N-benzyl(meth)acrylamide, p-hydroxyphenyl(meth)acrylamide, N-(3-hydroxy-2,2-dimethylpropyl)methacrylamide, ethylimidazolidone methacrylate or N-vinylformamide, N-vinylpyrrolidone. These comonomers can be present in an amount up to 5% by weight, preferably up to 3% by weight, of the total monomers in the first monomer composition.

The polymer dispersion used in the present binder mixture is produced by free radical emulsion polymerization of the monomer mixture described above in an aqueous medium and normally in the presence of a free radical initiator. Suitable free radical initiators include hydrogen peroxide, benzoyl peroxide, cyclohexanone peroxide, isopropyl cumyl hydroperoxide, persulfates of potassium, of sodium and of ammonium, peroxides of saturated monobasic aliphatic carboxylic acids having an even number of carbon atoms and a C8-C12 chain length, tert-butyl hydroperoxide, di-tert-butyl peroxide, diisopropyl percarbonate, azoisobutyronitrile, acetylcyclohexanesulfonyl peroxide, tert-butyl perbenzoate, tert-butyl peroctanoate, bis(3,5,5-trimethyl)hexanoyl peroxide, tert-butyl perpivalate, hydroperoxypinane, p-methane hydroperoxide. The abovementioned compounds can also be used within a redox system, using inorganic and organic reducing agents, usually in combination with transition metal salts, such as iron(II) salts. The reducing agent employed should be chosen to avoid the co-production of formaldehyde and other VOCs and in one preferred embodiment, the reducing agent comprises one or more sulfinic acids, or salts thereof, optionally in combination with the corresponding sulfonic acid derivative. An especially preferred reducing agent of this type comprises a combination of 2-hydroxy-2-sulfinato acetic acid-disodium salt and 2-hydroxy-2-sulfonato acetic acid-disodium salt, with or without sodium sulfite. Reducing agents of this type are commercially available under the tradenames Bruggolite^{®} FF6 and FF7 from L. Brüggemann KG. Such reducing agents are more fully described in U.S. Patent Nos. 6,211,400; 6,586,622 and 6,787,594, all of which patents are incorporated herein by reference.

Typically, the oxidizing agent employed in the redox initiator system is present in an amount from about 0.01 % to about 3.0%, preferably form about 0.02 to about 1%, more preferably from about 0.05% to about 0.5%, by weight based on total weight of co-monomers. The reducing agent is typically used at levels of from about 0.01% to about 3.0%, preferably from about 0.01% to about 0.5%, more preferably from about 0.025% to about 0.25%, based on total weight of co-monomers.

The copolymer described herein can be prepared using any known emulsion polymerization procedure which a produces a copolymer dispersions in aqueous latex form. Such procedures are described in, for example, in U.S. Patent No. 5,633,334, and in the Encyclopedia of Polymer Science and Engineering, Vol. 8, p. 659 ff (1987). The disclosures of both of these publications are incorporated herein by reference in their entirety.

The polymerization may be carried out in one, two or more stages with different monomer combinations, giving polymer dispersions having particles with homogeneous or heterogeneous, e.g., core shell or hemispheres, morphology. Any reactor system such as batch, loop, continuous, cascade, etc, may be employed.

The polymerization temperature generally ranges from about 20 °C to about 150 °C, more preferably from about 50 °C to about 120 °C. The polymerization generally takes place under pressure if appropriate, preferably from about 2 to about 150 bar, more preferably from about 5 to about 100 bar.

In a typical polymerization procedure involving, for example, vinyl acetate/ethylene copolymer dispersions, the vinyl acetate, ethylene, stabilizing system and other co-monomers can be polymerized in an aqueous medium under pressures up to about 120 bar in the presence the specified stabilizers and initiators. The aqueous reaction mixture in the polymerization vessel can be maintained by a suitable buffering agent at a pH of about 2 to about 7.

The manner of combining the several polymerization ingredients, i.e., stabilizing system, co-monomers, initiator system components, etc., can vary widely. Generally an aqueous medium containing at least part of the stabilizing system can be initially formed in a polymerization vessel with the various other polymerization ingredients being added to the vessel thereafter.

Co-monomers can be added to the polymerization vessel continuously, incrementally or as a single charge addition of the entire amounts of co-monomers to be used. Co-monomers can be employed as pure monomers or can be used in the form of a pre-mixed emulsion. Ethylene as a co-monomer can be pumped into the polymerization vessel and maintained under appropriate pressure therein.

It is possible for the total amount of redox initiator system to be included in the initial charge to the reactor at the beginning of the polymerization. Preferably, however, a portion of the initiator is included in the initial charge at the beginning, and the remainder is added after the polymerization has been initiated, in one or more steps or continuously. It is also possible to start the emulsion polymerization using a seed latex, for example with about 0.5 to about 15% by weight of the polymerization mixture.

The product of the polymerization is an aqueous copolymer dispersion having a solids contents of from 20 to 70% by weight, preferably from 30 to 65% by weight and more preferably from 40 to 60% by weight, and a pH between 2 and 7, generally between 2.5 and 6.

The resultant aqueous dispersions will typically comprise a stabilizing system including at least one protective colloid and/or comprise at least one emulsifier.

Although a variety of protective colloids can be used in the stabilizing system, it is preferred to employ cellulose-based stabilizers. Examples of suitable cellulose-based materials include methyl cellulose, hydroxyethyl cellulose, hydroxypropyl cellulose, hydroxypropyl methyl cellulose, ethyl hydroxyethyl cellulose, methyl hydroxyethyl cellulose and combinations of these cellulose ethers. Hydroxyethyl cellulose (HEC), which is commercially available under the tradename Natrosol^{™,} is most preferred. Generally, the cellulose ether stabilizer is present in an amount of at least 0.05 % by weight, such as from 0.2 to 3 % by weight, from based on the total amount of monomers.

In addition, the stabilizing system typically includes one or more emulsifiers, particularly nonionic emulsifiers. Examples of suitable nonionic emulsifiers include acyl, alkyl, oleyl, and alkylaryl ethoxylates. These products are commercially available, for example, under the name Genapol^{®}, Lutensol^{®} or Emulan^{®}. They include, for example, ethoxylated mono-, di-, and tri-alkylphenols (EO degree: 3 to 50, alkyl substituent radical: C₄ to C₁₂) and also ethoxylated fatty alcohols (EO degree: 3 to 80; alkyl radical: C₈ to C₃₆), especially C₁₂-C₁₄ fatty alcohol (3-40) ethoxylates, C₁₃-C₁₅ oxo-process alcohol (3-40) ethoxylates, C₁₆-C₁₈ fatty alcohol (11-80) ethoxylates, C₁₀ oxo-process alcohol (3-40) ethoxylates, C₁₃ oxo-process alcohol (3-40) ethoxylates, polyoxyethylenesorbitan monooleate with 20 ethylene oxide groups, copolymers of ethylene oxide and propylene oxide having a minimum ethylene oxide content of 10% by weight, the polyethylene oxide (4-40) ethers of oleyl alcohol, and the polyethene oxide (4-40) ethers of nonylphenol.

The amount of nonionic emulsifiers used in preparing the copolymer dispersions herein is typically at least 0.5 % by weight, such as about 1% to about 8% by weight, preferably about 1% to about 5% by weight, more preferably about 1% to about 4% by weight, based on the total main monomer quantity. Mixtures of nonionic and anionic emulsifiers can also be employed. Suitable anionic emulsifiers include the alkyl aryl sulfonates, alkali metal alkyl sulfates, the sulfonated alkyl esters, and fatty acid soaps. Specific examples include sodium dodecylbenzene sulfonate, sodium butylnaphthalene sulfonate, sodium lauryl sulfate, disodium dodecyl diphenyl ether disulfonate, N-octadecyl sulfosuccinate and dioctyl sodiumsulfosuccinate.

The resultant aqueous copolymer dispersion is a stable fluid system which can be used to produce solvent free-coating compositions suitable for coating a multitude of substrates and in particular for use an interior architectural paint. When used as a coating composition, the dispersion described above is typically combined with one or more conventional fillers and/or pigments. In this context, pigments are understood as meaning solids which have a refractive index greater than or equal to 1.75, whereas fillers are understood as meaning solids which have a refractive index of less than 1.75.

Examples of mineral fillers are alkaline earth metal oxides, alkaline earth metal carbonates and/or silicate fillers, in particular calcium carbonate, mica, feldspar, kaolin, talc, quartz powders and/or particulate quartz fractions and marble powders and/or particulate marble fractions. The filler generally has a particle size of 1 to 40 µm.

Pigments may be any inorganic or organic and may be color-imparting or opaque finely divided solids. Preferred pigments have a mean diameter for the primary particle of less than or equal to 1 µm, preferably from 0.1 to 0.5 µm, determined by sedimentation analysis according to DIN 66115. Examples of inorganic pigments are metal oxides, such as titanium dioxide, iron oxide or zinc oxide, in particular titanium dioxide. Examples of organic pigments are phthalocyanines, in particular phthalocyanine blue, or diaryl pigments, azo pigments or quinacridone pigments.

To disperse the fillers and pigments in water, auxiliaries based on anionic or non-ionic wetting agents, such as preferably, for example, sodium pyrophosphate, sodium polyphosphate, naphthalenesulfonate, sodium polyacrylate, sodium polymaleinates and polyphosphonates such as sodium 1-hydroxyethane-1,1-diphosphonate and sodium nitrilotris(methylenephosphonate), may be added.

Thickeners may also be added to the coating compositions described herein. Thickeners which may be used include, *inter alia,* preferably cellulose derivates such as methylcellulose (MC), hydroxyethylcellulose (HEC) and carboxymethyl-cellulose. Other thickeners which may be used include casein, gum arabic, gum tragacanth, starch, sodium alginate, polyvinyl alcohol, polyvinylpyrrolidone, sodium polyacrylate and water-soluble copolymers based on acrylic and methacrylic acid, such as acrylic acid/acrylamide and methacrylic acid/acrylic ester copolymers. Hydrophobically-modified alkali soluble (acrylic) emulsions (HASE), hydrophobically-modified ethoxylate (poly)urethanes (HEUR), and polyether polyols (PEPO) are also available. Inorganic thickeners, such as, for example, bentonites or hectorite, may also be used.

For various applications, it is sometimes also desirable to include small amounts of other additives, such as biocides, pH modifiers, and defoamers and surfactants, incorporated in the latex paint compositions herein. This may be done in a conventional manner and at any convenient point in the preparation of the latexes.

The invention will now be more particularly described with reference to the following non-limiting Examples.

In the Examples, low temperature cracking resistance was determined by conditioning a paint sample and a clean glass panel in a programmable temperature and humidity chamber at 3°C and 50% humidity overnight. A 400 micron thick wet film of the paint was then applied over the glass panel. The film was allowed to dry over night at 3°C and 50% humidity, and visually examined for signs of cracking.

Scrub Resistance was determined in accordance with ASTM D2486 using the following test protocol. A test scrub panel was prepared by drawing a 175 micron thick film of paint on a leneta chart and allowing the paint to dry for 7 days in an open room maintained at 23±2°C and 50±5% relative humidity. The dried chart was affixed to a glass panel and put into a scrubbing machine equipped with a scrubbing brush and a basin for holding the test panel. The brush was prepared by immersing it overnight in water. The brush was placed in the machine holder and the test scrub panel was put under the brush and over a shim that was smooth and free of burrs and placed perpendicular to the path of the brush. The brush bristles were spread evenly with 10 grams of a standardized scrub medium (available from Leneta Co.). The panel was then wet with 5 ml of reagent water in the path of the brush. The scrub machine was started. After every 400 cycles before failure, 10 grams of scrub medium and 5 ml of reagent water were added to the brush bristles. The number of cycles to remove one continuous thin line of paint film across the 12.7 mm width of the shim was measured.

Freeze-Thaw stability was measured in accordance with Test GB/T 9268-2008 as follows. A paint sample was transferred into 500ml plastic can and kept in a freezer for 18 hours at -5±2°C. The sample was then removed from the freezer and was allowed to thaw for 6 hours to room temperature. This cycle of freezing-thawing was repeated 3 times and then the sample was observed for flow properties, lump formation and coagulation. Compositions which exhibit no coagulation after 3 freeze/thaw cycles are considered to be acceptable with respect to freeze/thaw stability.

Elongation at break was measured in accordance with Test JG/T 172-2005 using the following procedure. A test specimen was prepared by drawing down with a film caster to a dry film thickness of 1.0 ±0.2mm, and allowing the specimen to dry for 14 days in an open room maintained at 23±2°C and 50±5% relative humidity. The specimen was shaped like a dumbbell and its elasticity was measured with a stretch speed at 200 mm/min and the elongation at break recorded as results at room temperature. A further specimen was placed in an oven at 80±2°C and allowed to dry for 7 days. The further specimen was then removed from the oven and allowed to stand in an open room maintained at 23±2°C and 50±5% relative humidity for 1 day. The elongation at break was again measured at a stretch speed at 200 mm/min and recorded as results after heat treatment.

## Claims

1. An aqueous binder mixture comprising:
(A) an aqueous copolymer dispersion which has a glass transition temperature, Tg, of less than 10 °C and which is prepared by emulsion polymerization of a monomer mixture comprising:
(i) at least 60% by weight, based on the total amount of monomers, of at least one vinyl ester;
(ii) from 15 to 30% by weight, based on the total amount of monomers, of ethylene;
(iii) from 0.05 to 5 % by weight, based on the total amount of monomers, of an ethylenically unsaturated carboxylic acid having at least 4 carbon atoms; and
(iv) from 0.05 to 5 % by weight, based on the total amount of monomers, of an ethylenically unsaturated sulfonic acid or salt thereof.

2. The binder mixture of Claim 1, wherein the at least one vinyl ester comprises vinyl acetate.

3. The binder mixture of Claim 1 or Claim 2 and comprising from 18 to 30% by weight, preferably 20 to 25% by weight, based on the total amount of monomers, of ethylene.

4. The binder mixture of any preceding Claim and comprising from 0.2 to 1.5% by weight, based on the total amount of monomers, of said ethylenically unsaturated carboxylic acid having at least 4 carbon atoms.

5. The binder mixture of any preceding Claim and comprising from 0.2 to 1.5% by weight, based on the total amount of monomers, of said ethylenically unsaturated sulfonic acid or salt thereof.

6. The binder mixture of any preceding Claim, wherein the ethylenically unsaturated carboxylic acid comprises crotonic acid.

7. The binder mixture of any preceding Claim, wherein the ethylenically unsaturated sulfonic acid has 2 to 8 carbon atoms.

8. The binder mixture of any preceding Claim, wherein the ethylenically unsaturated sulfonic acid comprises vinyl sulfonic acid.

9. The binder mixture of any preceding Claim, wherein the aqueous copolymer dispersion further comprises (v) up to 1 % by weight, preferably from 0.1 to 0.5 % by weight, based on the total amount of monomers, of an unsaturated silane comonomer.

10. The binder mixture of any preceding Claim and further comprising:
(B) at least 0.05 % by weight, preferably from 0.2 to 3 % by weight, based on the total amount of monomers, of a cellulose-based stabilizer.

11. The binder mixture of Claim 10, wherein the cellulose-based stabilizer comprises hydroxyethyl cellulose.

12. A coating composition comprising:
(a) the aqueous binder mixture of any preceding Claim;
(b) at least one solids component selected from a filler and a pigment; and
(c) at least one auxiliary component selected from the group consisting of wetting agents, dispersants, emulsifiers, fillers, thickeners, defoamers, dyes and preservatives.

13. Use of the coating composition of Claim 12 in a paint formulation.

## Patentansprüche

1. Eine wässrige Bindermischung enthaltend:
(A) eine wässrige Copolymerdispersion, die eine Glasübergangstemperatur Tg von weniger als 10°C aufweist und die hergestellt wird durch Emulsionspolymerisation einer Monomermischung enthaltend:
(i) mindestens 60 Gewichts-%, basierend auf der Gesamtmenge der Monomeren, mindestens eines Vinylesters;
(ii) von 15 bis 30 Gewichts-%, basierend auf der Gesamtmenge der Monomeren, Ethylen;
(iii) von 0,05 bis 5 Gewichts-%, basierend auf der Gesamtmenge der Monomeren, einer ethylenisch ungesättigten Carbonsäure mit mindestens 4 Kohlenstoffatomen; und
(iv) von 0,05 bis 5 Gewichts-%, basierend auf der Gesamtmenge der Monomeren, einer ethylenisch ungesättigten Sulfonsäure oder eines Salzes davon.

2. Die Bindermischung des Anspruchs 1, worin der mindestens eine Vinylester Vinylacetat umfasst.

3. Die Bindermischung des Anspruchs 1 oder Anspruchs 2 und enthaltend von 18 bis 30 Gewichts-%, vorzugsweise 20 bis 25 Gewichts-%, basierend auf der Gesamtmenge der Monomeren, Ethylen.

4. Die Bindermischung eines beliebigen der vorstehenden Ansprüche und enthaltend von 0,2 bis 1,5 Gewichts-%, basierend auf der Gesamtmenge der Monomeren, besagter ethylenisch ungesättigter Carbonsäure mit mindestens 4 Kohlenstoffatomen.

5. Die Bindermischung eines beliebigen der vorstehenden Ansprüche und enthaltend von 0,2 bis 1,5 Gewichts-%, basierend auf der Gesamtmenge der Monomeren, besagter ethylenisch ungesättigter Sulfonsäure oder eines Salzes davon.

6. Die Bindermischung eines beliebigen der vorstehenden Ansprüche, worin die ethylenisch ungesättigte Carbonsäure Crotonsäure umfasst.

7. Die Bindermischung eines beliebigen der vorstehenden Ansprüche, worin die ethylenisch ungesättigte Sulfonsäure 2 bis 8 Kohlenstoffatome besitzt.

8. Die Bindermischung eines beliebigen der vorstehenden Ansprüche, worin die ethylenisch ungesättigte Sulfonsäure Vinylsulfonsäure umfasst.

9. Die Bindermischung eines beliebigen der vorstehenden Ansprüche, worin die wässrige Copolymerdispersion weiterhin enthält (v) bis zu 1 Gewichts-%, vorzugsweise von 0,1 bis 0,5 Gewichts-%, basierend auf der Gesamtmenge der Monomeren, eines ungesättigten Silancomonomers.

10. Die Bindermischung eines beliebigen der vorstehenden Ansprüche und weiterhin enthaltend:
(B) mindestens 0,05 Gewichts-%, vorzugsweise von 0,2 bis 3 Gewichts-%, basierend auf der Gesamtmenge der Monomeren, eines Stabilisators auf Cellulosebasis.

11. Die Bindermischung des Anspruchs 10, worin der Stabilisator auf Cellulosebasis Hydroxyethylcellulose umfasst.

12. Eine Beschichtungszusammensetzung enthaltend:
(a) die wässrige Bindermischung eines beliebigen der vorstehenden Ansprüche;
(b) mindestens eine Feststoffkomponente ausgewählt aus einem Füllstoff und einem Pigment; und
(c) mindestens eine Hilfskomponente ausgewählt aus der Gruppe bestehend aus Benetzungsmitteln, Dispergiermitteln, Emulgiermitteln, Füllstoffen, Verdickungsmitteln, Entschäumungsmitteln, Farbstoffen und Konservierungsmitteln.

13. Verwendung der Beschichtungszusammensetzung des Anspruchs 12 in einer Anstrichzubereitung.

## Revendications

1. Mélange liant aqueux comprenant :
(A) une dispersion aqueuse de copolymère qui a une température de transition vitreuse, Tg, de moins de 10°C et qui est préparée par polymérisation en émulsion d'un mélange de monomères comprenant :
i) au moins 60 % en poids, sur la base de la quantité totale de monomères, d'au moins un ester vinylique ;
ii) de 15 à 30 % en poids, sur la base de la quantité totale de monomères, d'éthylène ;
iii) de 0,05 à 5 % en poids, sur la base de la quantité totale de monomères, d'un acide carboxylique éthyléniquement insaturé ayant au moins 4 atomes de carbone ; et
iv) de 0,05 à 5 % en poids, sur la base de la quantité totale de monomères, d'un acide sulfonique éthyléniquement insaturé ou d'un sel de celui-ci.

2. Mélange liant selon la revendication 1, dans lequel le ou les esters vinyliques comprennent l'acétate de vinyle.

3. Mélange liant selon la revendication 1 ou la revendication 2 et comprenant de 18 à 30 % en poids, de préférence de 20 à 25 % en poids, sur la base de la quantité totale de monomères, d'éthylène.

4. Mélange liant selon l'une quelconque des revendications précédentes et comprenant de 0,2 à 1,5 % en poids, sur la base de la quantité totale de monomères, dudit acide carboxylique éthyléniquement insaturé ayant au moins 4 atomes de carbone.

5. Mélange liant selon l'une quelconque des revendications précédentes et comprenant de 0,2 à 1,5 % en poids, sur la base de la quantité totale de monomères, dudit acide sulfonique éthyléniquement insaturé ou du sel de celui-ci.

6. Mélange liant selon l'une quelconque des revendications précédentes, dans lequel l'acide carboxylique éthyléniquement insaturé comprend l'acide crotonique.

7. Mélange liant selon l'une quelconque des revendications précédentes, dans lequel l'acide sulfonique éthyléniquement insaturé a 2 à 8 atomes de carbone.

8. Mélange liant selon l'une quelconque des revendications précédentes, dans lequel l'acide sulfonique éthyléniquement insaturé comprend l'acide vinyl sulfonique.

9. Mélange liant selon l'une quelconque des revendications précédentes, dans lequel la dispersion aqueuse de copolymère comprend en outre (v) jusqu'à 1 % en poids, de préférence de 0,1 à 0,5 % en poids, sur la base de la quantité totale de monomères, d'un comonomère silane insaturé.

10. Mélange liant selon l'une quelconque des revendications précédentes et comprenant en outre :
(B) au moins 0,05 % en poids, de préférence de 0,2 à 3 % en poids, sur la base de la quantité totale de monomères, d'un stabilisant à base de cellulose.

11. Mélange de liant selon la revendication 10, dans lequel le stabilisant à base de cellulose comprend l'hydroxyéthyl cellulose.

12. Composition de revêtement comprenant :
(a) le mélange liant aqueux selon l'une quelconque des revendications précédentes ;
(b) au moins un composant solide choisi parmi une charge et un pigment ; et
(c) au moins un composant auxiliaire choisi dans le groupe consistant en agents mouillants, dispersants, émulsifiants, charges, épaississants, agents antimousse, colorants et conservateurs.

13. Utilisation de la composition de revêtement selon la revendication 12 dans une formulation de peinture.
